# EUROPEAN PATENT SPECIFICATION

(11) **EP 4 505 765 B1**
(45) Date of publication and mention of the grant of the patent: **11.11.2026**
(21) Application number: 23712433.4
(22) Date of filing: 06.03.2023
(51) Int. Cl.: H04W 4/80

(54) **PERIPHERAL DEVICE SLOT SELECTION FOR MICROPHONE DATA**
AUSWAHL DES SCHLITZES EINES PERIPHERIEGERÄTES FÜR MIKROFONDATEN
SÉLECTION DE CRÉNEAU DE DISPOSITIF PÉRIPHÉRIQUE POUR DONNÉES DE MICROPHONE

(30) Priority: 01.04.2022 IN 202241019919
(43) Date of publication of application: 12.02.2025
(73) Proprietor: QUALCOMM INCORPORATED, San Diego, California 92121-1714 (US)
(72) Inventor: GOYAL, Giriraj, San Diego, California 92121 (US); AGARWAL, Vishal, San Diego, California 92121 (US); KIDIYOOR, Nitin Raghavendra, San Diego, California 92121 (US); SRIVASTAVA, Dishant, San Diego, California 92121 (US); BATRA, Mayank, San Diego, California 92121 (US)
(74) Representative: Bardehle Pagenberg Partnerschaft mbB Patentanwälte Rechtsanwälte
(86) International application number: PCT/US2023/063772
(87) International publication number: WO 2023/192740

(56) References cited:
- WO-A1-2020/259841
- WO-A1-2021/205235
- US-A1- 2020 221 359
- US-A1- 2020 336 958

## Description

### CROSS-REFERENCE TO RELATED APPLICATION

This Patent Application claims priority to Indian Provisional Patent Application No. 202241019919, filed on April 1, 2022, entitled "PERIPHERAL DEVICE SLOT SELECTION FOR MICROPHONE DATA," and assigned to the assignee hereof.

### FIELD OF THE DISCLOSURE

Aspects of the present disclosure generally relate to wireless communication and to techniques and apparatuses for a peripheral device to select slots to transmit microphone data.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP). Multi-access technologies may also include New Radio (NR) 5G or 6G.

A wireless network may include a number of base stations (BSs) that can support communication for a number of user equipment (UEs). A UE may communicate with a BS via the downlink and uplink. "Downlink" or "forward link" refers to the communication link from the BS to the UE, and "uplink" or "reverse link" refers to the communication link from the UE to the BS. As will be described in more detail herein, a BS may be referred to as a Node B, a gNB, an access point (AP), a radio head, a transmit receive point (TRP), a New Radio (NR) BS, or a 5G Node B.

The UE may operate with peripheral devices (e.g., earbuds, smart watches) using short range wireless communication. Short range wireless communication enables wireless communication over relatively short distances (e.g., within 30 meters). Bluetooth^{®} protocols are an example of a wireless technology standard for exchanging data over short distances using short-wavelength ultra high frequency (UHF) radio waves from 2.4 gigahertz (GHz) to 2.485 GHz. Bluetooth^{®} Low Energy (BLE) protocol is for communication with devices running on low power.

US 2020/221359 A1 discloses a solution where a secondary earbud can sniff into the eSCO communication channel used between a host device and a primary earbud. and it transmits microphone data to the primary earbud.

### SUMMARY

Some aspects described herein relate to a method of wireless communication performed by a secondary peripheral device as defined in the independent claim 7.

Some aspects described herein relate to a method of wireless communication performed by a primary peripheral device as defined in the independent claim 10.

Some aspects described herein relate to a secondary peripheral device for wireless communication as defined in the independent claim 1.

Some aspects described herein relate to a primary peripheral device for wireless communication as defined in the independent claim 4.

Some aspects described herein relate to a non-transitory computer-readable medium that stores a set of instructions for wireless communication by a secondary peripheral device. The set of instructions, when executed by one or more processors of the secondary peripheral device, may cause the secondary peripheral device to obtain microphone data. The set of instructions, when executed by one or more processors of the secondary peripheral device, may cause the secondary peripheral device to select a P2C slot, among P2C slots of an eSCO interval, that occurs after a first P2C slot in the eSCO interval. The set of instructions, when executed by one or more processors of the secondary peripheral device, may cause the secondary peripheral device to transmit the microphone data to a primary peripheral device in the P2C slot.

Some aspects described herein relate to a non-transitory computer-readable medium that stores a set of instructions for wireless communication by a primary peripheral device. The set of instructions, when executed by one or more processors of the primary peripheral device, may cause the primary peripheral device to receive microphone data in a P2C slot, among P2C slots of an eSCO interval, that is not a first P2C slot of the eSCO interval. The set of instructions, when executed by one or more processors of the primary peripheral device, may cause the primary peripheral device to transmit the microphone data to a central device.

Aspects generally include a method, apparatus, system, computer program product, non-transitory computer-readable medium, user equipment, peripheral device, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of peripheral devices, in accordance with the present disclosure.
Fig. 2 is a diagram illustrating an example of components of a peripheral device, in accordance with the present disclosure.
Fig. 3 is a diagram illustrating an example of forwarding microphone data, in accordance with the present disclosure.
Fig. 4 is a diagram illustrating an example of transmitting microphone (MIC) data, in accordance with the present disclosure.
Fig. 5 is a diagram illustrating an example of slot offset for forwarding MIC data, in accordance with the present disclosure.
Fig. 6 is a diagram illustrating an example process performed, for example, by a second peripheral device, in accordance with the present disclosure.
Fig. 7 is a diagram illustrating an example process performed, for example, by a first peripheral device, in accordance with the present disclosure.
Fig. 8 is a block diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of wireless systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with short range wireless protocols, Long Term Evolution (LTE), or a 5G or New Radio (NR) radio access technology (RAT), aspects of the present disclosure can be applied to other wireless protocols or RATs.

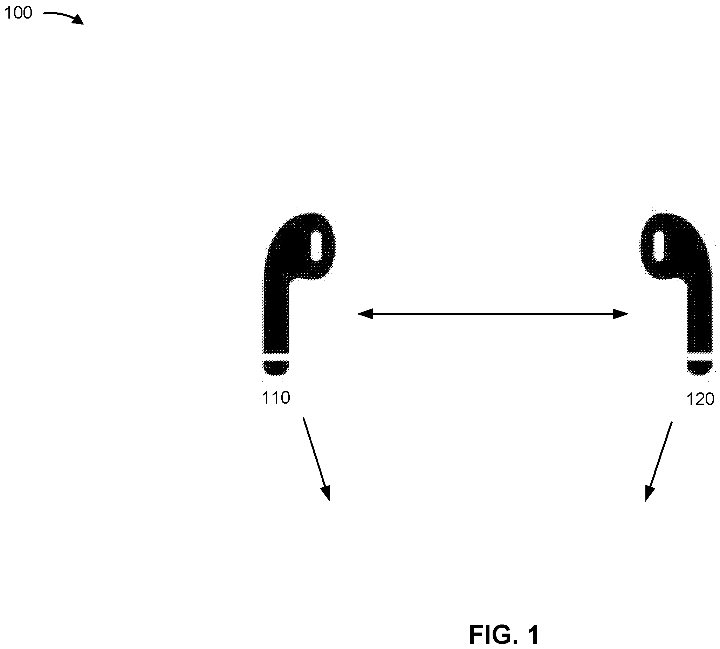

Fig. 1 is a diagram illustrating an example of peripheral devices, in accordance with the present disclosure. A peripheral device may connect to and operate with a user equipment (UE). A peripheral device may include a medical device or equipment, biometric sensors/devices, wearable devices or peripheral devices (earbuds, smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium. Example 100 shows a pair of peripheral devices 110 and 120 (e.g., earbuds) that may be paired to each other. Peripheral device 110 and peripheral device 120 may communicate using the electromagnetic spectrum, which may be subdivided based on frequency or wavelength into various classes, bands, or channels. Peripheral device 110 and/or peripheral device 120 may use wireless protocols to pair to each other and/or to pair to a UE.

Some peripheral devices may work with or may be considered machine-type communication (MTC) devices or evolved or enhanced machine-type communication (eMTC) devices. Some peripheral devices may work with or may be considered Internet-of-Things (IoT) devices or narrowband IoT (NB-IoT) devices. A peripheral device may include or be included inside a housing that houses multiple components, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

As indicated above, Fig. 1 is provided as an example. Other examples may differ from what is described with regard to Fig. 1.

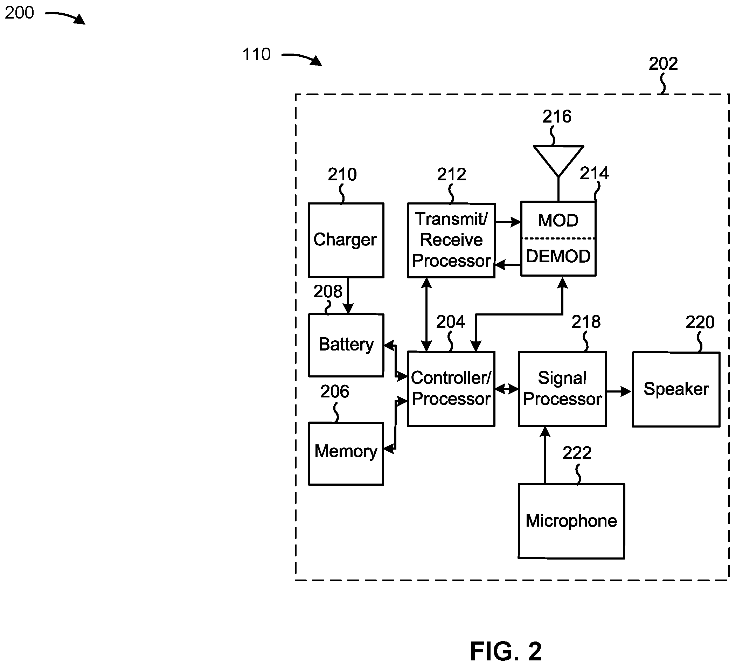

Fig. 2 is a diagram illustrating an example 200 of components of a peripheral device, such as an earbud, in accordance with the present disclosure. Peripheral device 110 may include a housing 202 shaped to fit in or on an ear and configured to contain multiple components. Housing 202 may include a control/processor 204, which may include one or more controllers, one or more processors, or a combination thereof, that executes program code or instructions stored in a memory 206. Housing 202 may include a battery 208 that is a power source connected to charger 210. Charger 210 may receive power via a cord or by induction and charge battery 208. Housing 202 may include a transmit/receive processor 212 that uses a modulator/demodulator 214 to process input streams received with one or more antennas 216 or to process output streams transmitted with the one or more antennas 216. The one or more antennas 216 may include, or may be included within, one or more antenna panels, antenna groups, sets of antenna elements, and/or antenna arrays, among other examples. Transmit/receive processor 212 may be configured to determine a reference signal received power (RSRP) parameter, a received signal strength indicator (RSSI) parameter, a reference signal received quality (RSRQ) parameter, and/or a channel quality indicator (CQI) parameter of wireless signals.

Housing 202 may include a signal processor 218 for processing audio signals output by speaker 220 and for processing audio signals received by microphone 222. Signal processor 218 may include filters, amplifiers, digital-to-analog converters, analog-to-digital converter, and/or other components for processing audio signals.

The components shown in Fig. 2, and other sensors or components not shown, may be controlled by controller/processor 204 and memory 206 to perform aspects of any of the methods described herein with reference to Figs. 1-8. For example, a pair of earbuds may each include the components shown in Fig. 2. The earbuds may each connect to a UE and use a connected isochronous stream (CIS) to provide audio output. A CIS may be a point-to-point, data transportation stream between the UE and a peripheral device (e.g., earbud). According to some aspects of the present disclosure, one earbud may maintain a control channel to the UE for both earbuds.

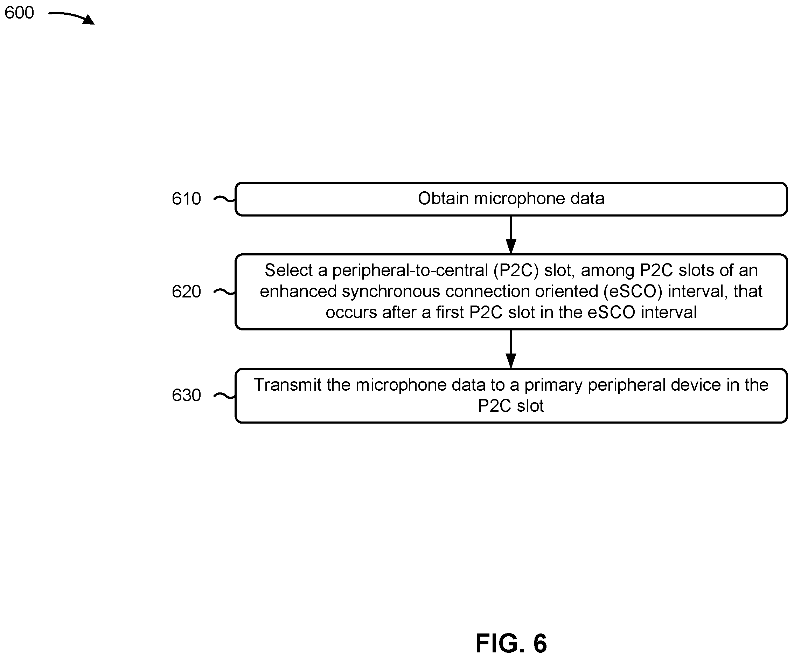

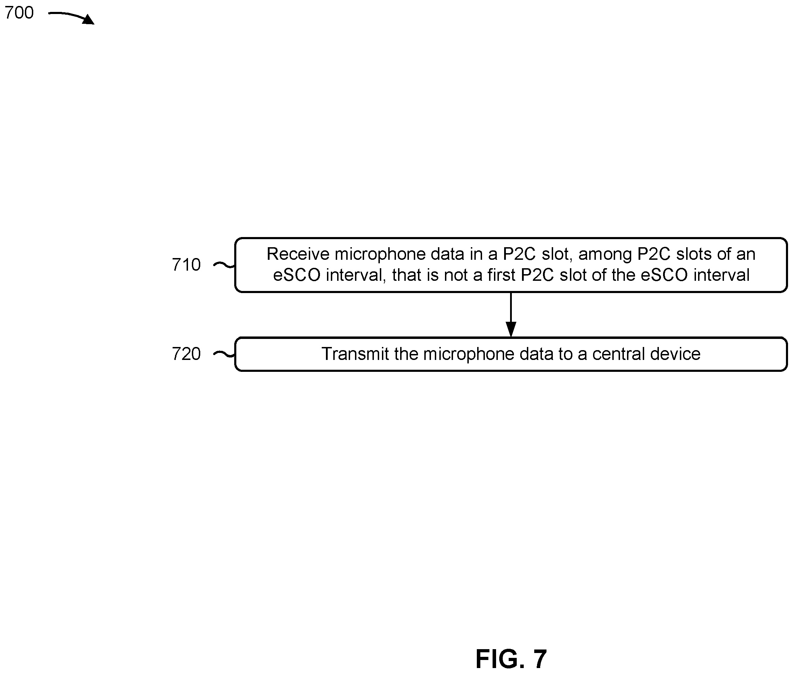

Controller/processor 204 of peripheral device 110, a controller/processor of a UE, and/or any other component(s) of Fig. 2 may perform one or more techniques associated with selecting slots to transmit microphone data, as described in more detail elsewhere herein. In some aspects, a peripheral device described herein is the peripheral device 110, is included in peripheral device 110, or includes one or more components of peripheral device 110 shown in Fig. 2. For example, controller/processor 204 and/or any other component(s) of Fig. 2 may perform or direct operations of, for example, process 600 of Fig. 6, process 700 of Fig. 7, and/or other processes as described herein. Memory 206 may store data and program codes for the peripheral device, respectively. In some aspects, memory 206 may include a non-transitory computer-readable medium storing one or more instructions (e.g., code and/or program code) for wireless communication. For example, the one or more instructions, when executed (e.g., directly, or after compiling, converting, and/or interpreting) by one or more processors of peripheral device 110, may cause the one or more processors, peripheral device 110, and/or another device to perform or direct operations of, for example, process 600 of Fig. 6, process 700 of Fig. 7, and/or other processes as described herein. In some aspects, executing instructions may include running the instructions, converting the instructions, compiling the instructions, and/or interpreting the instructions, among other examples.

While blocks in Fig. 2 are illustrated as distinct components, the functions described above with respect to the blocks may be implemented in a single hardware, software, or combination component or in various combinations of components. For example, the functions described with respect to the transmit/receive processor 212 or signal processor 218 may be performed by or under the control of controller/processor 204. The peripheral device may also include other components to perform functions, including earbud functions.

In some aspects, the secondary peripheral device includes means for obtaining microphone data; means for selecting a peripheral-to-central (P2C) slot, among P2C slots of an enhanced synchronous connection oriented (eSCO) interval, that occurs after a first P2C slot in the eSCO interval; and/or means for transmitting the microphone data to a primary peripheral device in the P2C slot. In some aspects, the means for the second peripheral device to perform operations described herein may include, for example, one or more of controller/processor 204, memory 206, transmit/receive processor 212, modulator/demodulator 214, one or more antennas 216, signal processor 218, speaker 220, and/or microphone 222.

In some aspects, the primary peripheral device includes means for receiving microphone data in a P2C slot, among P2C slots of an eSCO interval, that is not a first P2C slot of the eSCO interval; and/or means for transmitting the microphone data to a central device. In some aspects, the means for the first peripheral device to perform operations described herein may include, for example, one or more of controller/processor 204, memory 206, transmit/receive processor 212, modulator/demodulator 214, one or more antennas 216, signal processor 218, speaker 220, and/or microphone 222.

As indicated above, Fig. 2 is provided as an example. Other examples may differ from what is described with regard to Fig. 2.

A UE may use peripheral devices, such as a smartwatch, earbuds or other hearables, to provide additional services to a user of the UE. For example, a pair of earbuds connected to the UE may provide voice or music to the user via audio signals. The earbuds may be wireless and operate according to connected isochronous group (CIG) features as specified by a device specification, such as a Bluetooth^{®} core specification. A UE may create a CIG that includes include one or more CISs. A CIS may be a point-to-point, data transportation stream between the UE and a peripheral device (e.g., earbud). The CIS may use a bidirectional communication protocol with feedback (e.g., acknowledgement). The UE may operate with the earbuds using concepts such as a true wireless stereo (TWS) concept or a Bluetooth^{®} low energy (LE) Audio (LEA) concept.

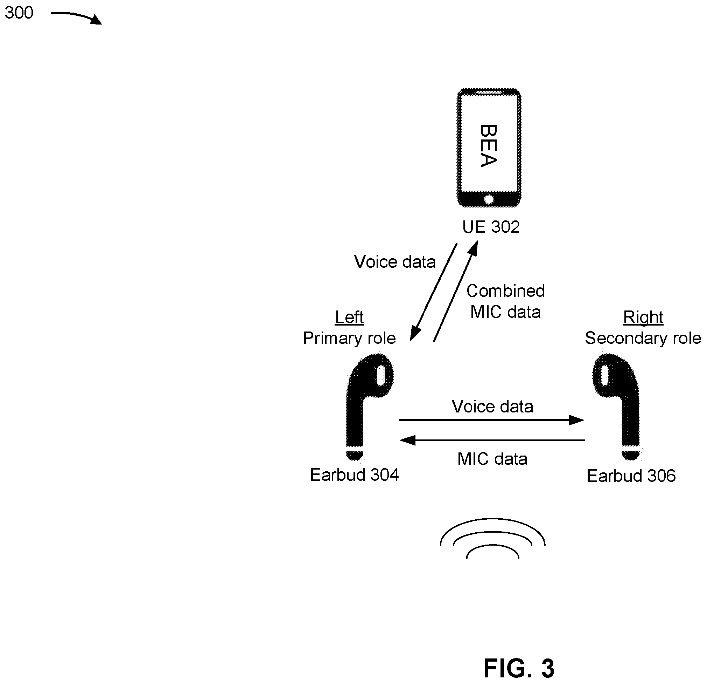

Fig. 3 is a diagram illustrating an example 300 of forwarding microphone data, in accordance with the present disclosure. Example 300 shows a UE 302 that operates with a first earbud 304 (e.g., peripheral device 110) and a second earbud 306 (e.g., peripheral device 110) that are paired together. UE 302 is labeled "BEA" to indicate that UE 302 supports a basic rate (BR)/enhanced data rate (EDR) Bluetooth^{®} Audio link.

When UE 302 operates with the pair of earbuds 304 and 306, earbud 304 takes on a primary role (P-bud), and earbud 306 takes on a secondary role (S-bud). Note that either earbud may take on the primary role or the secondary role. Earbud 304, as a primary earbud in the primary role, may connect to UE 302 over a BR/EDR link. Earbud 304 may connect to earbud 306 over a BR/EDR link, a Bluetooth^{®} LE link, or over any other proprietary link. Earbud 306, as a secondary earbud in the secondary role, may sniff the link between UE 302 and earbud 304 to receive packets that use an audio/video distribution transport protocol (AVDTP) or an eSCO protocol. Earbud 304 and earbud 306 may use a relay piconet between them to relay voice data or microphone data. Earbud 306, in the secondary role, may not connect to UE 302 on a BR/EDR link or an LE link. In some designs, earbud 304 may relay, to earbud 306, all of the audio data packets or all of the audio data packets that pertain to earbud 306 (e.g., right audio or left audio).

Voice pickup quality is highly challenged in an earbud form-factor. The two microphones in an earbud are far from the mouth and are physically close together, limiting a 2-microphone clear voice capture (CVC) algorithm approach to get best in class performance.

In some aspects, a secondary earbud (e.g., earbud 306) may transmit its microphone (MIC) data to a primary earbud (e.g., earbud 304). Earbud 304 may then combine its MIC data and earbud 306's MIC data, to construct an eSCO frame to send to a central device (e.g., UE 302). Using MIC data from both sides of the head is anticipated to improve the voice pickup performance, as there is a good degree of separation from the other microphones for providing improved noise suppression processing.

As indicated above, Fig. 3 is provided as an example. Other examples may differ from what is described with regard to Fig. 3.

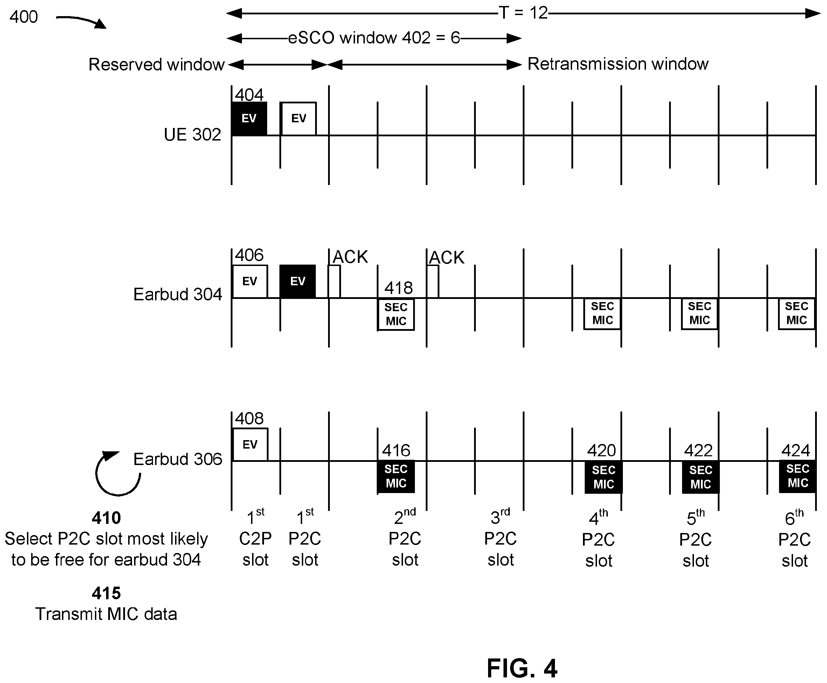

Fig. 4 is a diagram illustrating an example 400 of transmitting MIC data, in accordance with the present disclosure. Example 400 shows UE 302 operating with a primary peripheral device (e.g., earbud 304) and a secondary peripheral device (e.g., earbud 306). Earbud 304 and earbud 306 are paired together. The UE 302 may not be aware of the presence of earbud 306. Earbud 304 may share all the necessary information required for sniffing the link that earbud 304 has with the UE 302.

Example 400 shows multiple slots of an eSCO interval, which may repeat periodically. In example 400, the eSCO interval is 12 slots long, but the eSCO interval may be shorter or longer in other scenarios. Example 400 also shows an eSCO window 402, where initial communications by the UE 302 may be prioritized over earbud operations. The eSCO window 402 may include a reserved window of 2 slots and a retransmission window.

The UE 302 may transmit voice data (EV) at position 404 to earbud 304 in a first odd slot, which may be a central-to-peripheral (C2P) slot of a first slot pair. Position 406 shows that the voice data is received by earbud 304. That is, dark boxes in example 400 show where transmitted data originates, and light boxes in example 400 show where the data is received. Earbud 304 may transmit the voice data (position 408) to earbud 306. Earbud 304 may transmit MIC data to UE 302 in a P2C slot of the first slot pair, or in a first P2C slot.

Earbud 306 may also collect MIC data and may transmit the secondary MIC data to earbud 304 to improve a quality and/or reliability of MIC data that earbud 304 provides to the UE 302. However, earbud 304 and earbud 306 may have limited power storage, and if earbud 306 is transmitting MIC data when earbud 304 is not ready to receive the MIC data, because of expected communications between earbud 304 and the UE 302, earbud 306 is wasting power. Shorter battery life may frustrate the user of the earbuds.

According to various aspects described herein, earbud 306 may transmit its MIC data only when earbud 304 is most likely to be free to receive the MIC data. For example, earbud 304 may be free if earbud 304 is not required to respond to something (e.g., NULL packet) that is received (or not received) in a preceding slot. Earbud 306 may transmit MIC data in a first free P2C slot, which is a first P2C slot that earbud 306 estimates to be free. A P2C slot (also referred to as an "S2M slot") is a slot in BR/EDR communication where the central device (also referred to as "master device") can transmit to a peripheral device (also referred to as a "slave device"). Earbud 304 may determine that a P2C slots is free when earbud 304 is not required to transmit to the UE 302. A C2P slot (previously referred to as an "M2S" slot) is a slot in BR/EDR communication where a peripheral device can transmit to the central device. The P2C and C2P slots may be slots in a piconet of the UE 302, where earbud 306 sniffs packets transmitted form the UE 302 to earbud 304.

In some aspects, as shown by reference number 410, earbud 306 may select a P2C slot that is most likely to be free for earbud 304. As shown by reference number 415, earbud 306 may transmit MIC data in the selected P2C slot (and other selected P2C slots). By being more selective, based on estimations of when earbud 304 is to have a free P2C slot, earbud 304 may transmit less and conserve power. A longer battery life improves the user experience. The aspects described herein do not disrupt the traffic flow between the UE 302 and the earbud 304 and do not add any bandwidth consumption. The aspects described herein also align with eSCO mirroring solutions.

In some aspects, earbud 306 may select the next P2C slot that follows the first slot pair (shown as the 2^{nd} P2C slot). Earbud 306 may transmit MIC data at position 416, which is received by earbud 304 as MIC data at position 418. In some aspects, earbud 306 may select the next P2C slot that follows the eSCO window 402 (shown as the 4^{th} P2C slot) or that follows a reserved window. Earbud 306 may transmit the MIC data at position 420. In some aspects, earbud 306 may transmit the MIC data at positions 422 and 424 to improve reliability. Earbud 306 may transmit the MIC data multiple times based at least in part on a configured number of times or until a timeline or end of the eSCO interval, whichever comes earlier.

In some aspects, earbud 306 may avoid selecting a P2C slot in a slot-pair (e.g., 3^{rd} P2C slot) that follows a retransmit window. The gap of one slot-pair after the retransmit window may be busy due to exchanges between the UE 302 and earbud 304.

With respect to an eSCO mirroring protocol, a first place for MIC forwarding may be used for a NULL acknowledgement (ACK) from earbud 306 to earbud 304. When earbud 306 receives a packet before the second P2C slot, earbud 306 signals to earbud 304 to use a NULL-ACK packet in the next P2C slot. When earbud 306 does not have the packet before the first P2C slot, earbud 306 does not transmit anything in the first P2C slot. In some aspects, earbud 306 may transmit MIC data with an ACK or a negative acknowledgement (NACK) (e.g., as an eSCO relay message). For example, a NULL-ACK may be replaced with both the MIC data and an acknowledgement request notification (ARQN) bit that indicates an ACK in the same P2C slot. A non-transmission may be replaced with both the MIC data and an ARQN bit that indicates a NACK in the same P2C slot. Relay of an eSCO message from earbud 306 to earbud 304 may take place in, for example, the positions of the 4^{th} P2C slot, the 5th P2C slot or the 6th P2C slot. When both MIC forwarding and eSCO relay from earbud 306 to earbud 304 are used, earbud 306 may select some positions for the MIC data forwarding and some for the eSCO relay transmission. Note that position 416 of the 2nd P2C slot may be exclusive for MIC forwarding even if eSCO relay from earbud 306 to earbud 304 is enabled.

In some aspects, if earbud 306 is selecting a P2C slot that can be used for both MIC forwarding and for eSCO relaying (e.g., ACK, NACK) to earbud 304, earbud 306 may disable the eSCO relaying from earbud 306 to earbud 304 and use the P2C slot for forwarding MIC data. In some aspects, earbud 306 may use the P2C slot for both MIC forwarding and eSCO relaying. In some aspects, earbud 306 may alternate MIC forwarding and eSCO relaying in the P2C slots. A flow bit on eSCO *LT_ADDR* can be used to distinguish between eSCO relaying and MIC data. An opposite usage report sequence number (SEQN) in a relay message may indicated MIC data.

As indicated above, Fig. 4 is provided as an example. Other examples may differ from what is described with regard to Fig. 4.

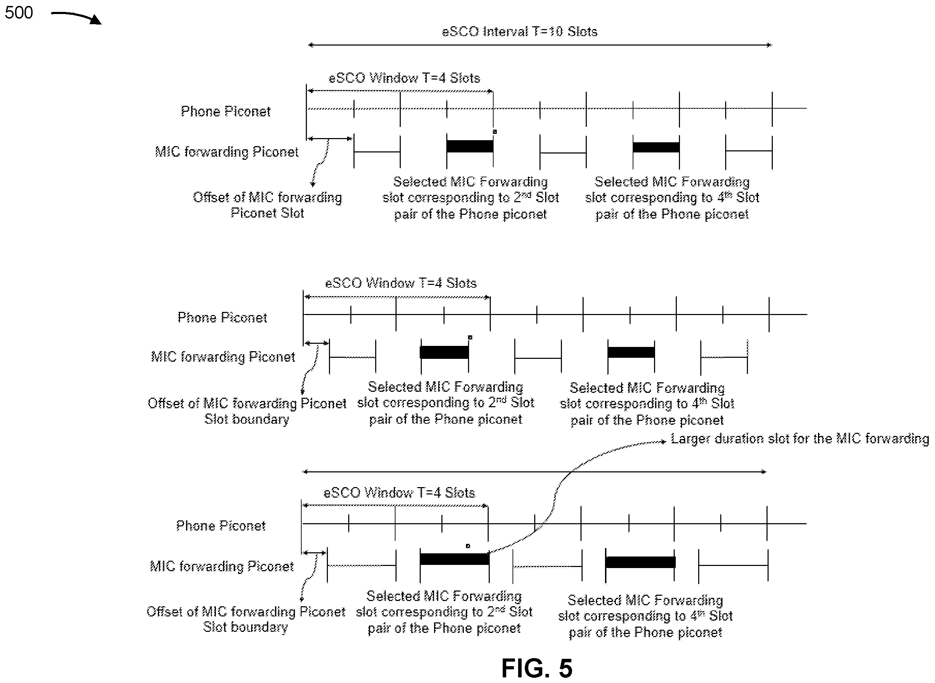

Fig. 5 is a diagram illustrating an example 500 of slot offset for forwarding MIC data, in accordance with the present disclosure.

Example 500 shows a MIC data forwarding piconet with a 625 microsecond (µs) offset from the piconet of UE 302. That is, the MIC data is forwarded at the P2C slot boundary. Example 500 shows earbud 306 transmitting MIC data at the 2^{nd} P2C slot and/or the 4^{th} P2C slot. The offset should be sufficient for earbud 304 to schedule receipt of the MIC data after having a synchronization timeout on the piconet of UE 302 or having a NULL packet from the UE 302.

In some aspects, the offset between a MIC forwarding slot boundary and a corresponding C2P slot boundary may be 625 µs. In some aspects, the offset is less than 625 µs. In some aspects, the slots may a have a larger duration for MIC forwarding due to the lesser offset, which allows for a higher MIC forwarding data rate. In some aspects, the offset is a maximum time required for earbud 304 to listen for MIC data after listening for voice data from the UE 302 and deciding whether to respond.

As indicated above, Fig. 5 is provided as an example. Other examples may differ from what is described with regard to Fig. 5.

Fig. 6 is a diagram illustrating an example process 600 performed, for example, by a secondary peripheral device, in accordance with the present disclosure. Example process 600 is an example where the secondary peripheral device (e.g., earbud 306) performs operations associated with peripheral device slot selection for microphone data.

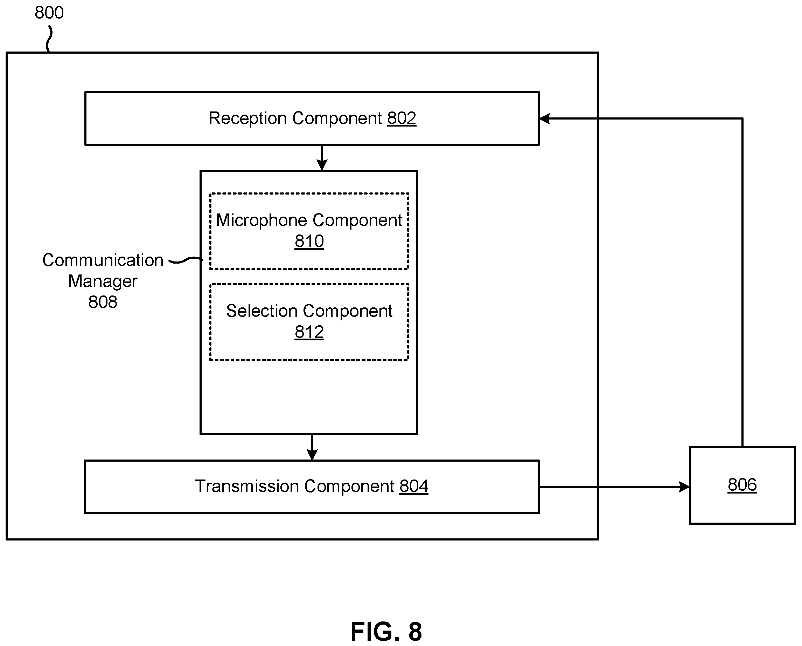

As shown in Fig. 6, in some aspects, process 600 may include obtaining microphone data (block 610). For example, the secondary peripheral device (e.g., using communication manager 808 and/or microphone component 810 depicted in Fig. 8) may obtain microphone data, as described above.

As further shown in Fig. 6, in some aspects, process 600 may include selecting a P2C slot, among P2C slots of an eSCO interval, that occurs after a first P2C slot in the eSCO interval (block 620). For example, the secondary peripheral device (e.g., using communication manager 808 and/or selection component 812 depicted in Fig. 8) may select a P2C slot, among P2C slots of an eSCO interval, that occurs after a first P2C slot in the eSCO interval, as described above.

As further shown in Fig. 6, in some aspects, process 600 may include transmitting the microphone data to a primary peripheral device in the P2C slot (block 630). For example, the secondary peripheral device (e.g., using communication manager 808 and/or transmission component 804 depicted in Fig. 8) may transmit the microphone data to a primary peripheral device in the P2C slot, as described above.

Process 600 may include additional aspects, such as any single aspect or any combination of aspects described below and/or in connection with one or more other processes described elsewhere herein.

In a first aspect, the P2C slot is a second P2C slot of the eSCO interval.

In a second aspect, alone or in combination with the first aspect, selecting the P2C slot includes selecting a first free P2C slot that is estimated to not require a response to what is included or not included in any of the two preceding C2P slots.

In a third aspect, alone or in combination with one or more of the first and second aspects, process 600 includes transmitting the microphone data in all P2C slots of the eSCO interval except a P2C slot of a reserved window.

In a fourth aspect, alone or in combination with one or more of the first through third aspects, selecting the P2C slot includes selecting a second P2C slot after an eSCO window of the eSCO interval.

In a fifth aspect, alone or in combination with one or more of the first through fourth aspects, transmitting the microphone data includes transmitting the microphone data in the P2C slot with an acknowledgement for voice data received in any of the two preceding C2P slots.

In a sixth aspect, alone or in combination with one or more of the first through fifth aspects, transmitting the microphone data includes transmitting the microphone data in the P2C slot with a negative acknowledgement for voice data not received in any of the two preceding C2P slots.

In a seventh aspect, alone or in combination with one or more of the first through sixth aspects, process 600 includes disabling eSCO relaying or performing eSCO relaying, and transmitting microphone data, in alternating P2C slots in the eSCO interval.

In an eighth aspect, alone or in combination with one or more of the first through seventh aspects, process 600 includes refraining from transmitting the microphone data in the first P2C slot.

In a ninth aspect, alone or in combination with one or more of the first through eighth aspects, transmitting the microphone data includes transmitting the microphone data in any or a combination of second through *T*/2 P2C slots, where *T* is a quantity of slots in the eSCO interval. In some aspects, transmitting the microphone data includes transmitting the microphone data in only one of a second P2C slot, a fourth P2C slot, a fifth P2C slot, or a sixth P2C slot of the eSCO interval. In some aspects, transmitting the microphone data includes transmitting the microphone data in only one of second through the *T*/2 P2C slots.

In a tenth aspect, alone or in combination with one or more of the first through ninth aspects, transmitting the microphone data includes transmitting the microphone data in P2C slots of the eSCO interval that are estimated to be free.

Although Fig. 6 shows example blocks of process 600, in some aspects, process 600 may include additional blocks, fewer blocks, different blocks, or differently arranged blocks than those depicted in Fig. 6. Additionally, or alternatively, two or more of the blocks of process 600 may be performed in parallel.

Fig. 7 is a diagram illustrating an example process 700 performed, for example, by a primary peripheral device, in accordance with the present disclosure. Example process 700 is an example where the primary peripheral device (e.g., earbud 304) performs operations associated with forwarding microphone data.

As shown in Fig. 7, in some aspects, process 700 may include receiving microphone data in a P2C slot, among P2C slots of an eSCO interval, that is not a first P2C slot of the eSCO interval (block 710). For example, the primary peripheral device (e.g., using communication manager 808 and/or reception component 802 depicted in Fig. 8) may receive microphone data in a P2C slot, among P2C slots of an eSCO interval, that is not a first P2C slot of the eSCO interval, as described above.

As further shown in Fig. 7, in some aspects, process 700 may include transmitting the microphone data to a central device (block 720). For example, the primary peripheral device (e.g., using communication manager 808 and/or transmission component 804 depicted in Fig. 8) may transmit the microphone data to a central device, as described above. In some aspects, this may be in the P2C slot.

Process 700 may include additional aspects, such as any single aspect or any combination of aspects described below and/or in connection with one or more other processes described elsewhere herein.

In a first aspect, the P2C slot is not the first P2C slot that immediately follows after an end of an eSCO window of the eSCO interval or a reserved window.

In a second aspect, alone or in combination with the first aspect, receiving the microphone data includes receiving the microphone data in a second P2C slot after an eSCO window of the eSCO interval or a reserved window.

In a third aspect, alone or in combination with one or more of the first and second aspects, receiving the microphone data includes receiving the microphone data in the P2C slot with an acknowledgement for voice data received in any of the two preceding C2P slots.

In a fourth aspect, alone or in combination with one or more of the first through third aspects, receiving the microphone data includes receiving the microphone data in the P2C slot with a negative acknowledgement.

In a fifth aspect, alone or in combination with one or more of the first through fourth aspects, receiving the microphone data includes receiving the microphone data in all free P2C slots of the eSCO interval.

Although Fig. 7 shows example blocks of process 700, in some aspects, process 700 may include additional blocks, fewer blocks, different blocks, or differently arranged blocks than those depicted in Fig. 7. Additionally, or alternatively, two or more of the blocks of process 700 may be performed in parallel.

Fig. 8 is a diagram of an example apparatus 800 for wireless communication. The apparatus 800 may be a peripheral device, or a peripheral device may include the apparatus 800. In some aspects, the apparatus 800 includes a reception component 802 and a transmission component 804, which may be in communication with one another (for example, via one or more buses and/or one or more other components). As shown, the apparatus 800 may communicate with another apparatus 806 (such as a UE, a base station, another peripheral device, or another wireless communication device) using the reception component 802 and the transmission component 804. As further shown, the apparatus 800 may include the communication manager 808. The communication manager 808 may include a microphone component 810 and/or a selection component 812, among other examples.

In some aspects, the apparatus 800 may be configured to perform one or more operations described herein in connection with Figs. 1-5. Additionally, or alternatively, the apparatus 800 may be configured to perform one or more processes described herein, such as process 600 of Fig. 6, process 700 of Fig. 7, or a combination thereof. In some aspects, the apparatus 800 and/or one or more components shown in Fig. 8 may include one or more components of the peripheral device described in connection with Fig. 2. Additionally, or alternatively, one or more components shown in Fig. 8 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 802 may receive communications, such as reference signals, control information, data communications, or a combination thereof, from the apparatus 806. The reception component 802 may provide received communications to one or more other components of the apparatus 800. In some aspects, the reception component 802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 800. In some aspects, the reception component 802 may include one or more antennas, a modem, a demodulator, a multi-input multiple output (MIMO) detector, a receive processor, a controller/processor, a memory, or a combination thereof, of the peripheral device described in connection with Fig. 2.

The transmission component 804 may transmit communications, such as reference signals, control information, data communications, or a combination thereof, to the apparatus 806. In some aspects, one or more other components of the apparatus 800 may generate communications and may provide the generated communications to the transmission component 804 for transmission to the apparatus 806. In some aspects, the transmission component 804 may perform signal processing on the generated communications (such as filtering, amplification, modulation, digital-to-analog conversion, multiplexing, interleaving, mapping, or encoding, among other examples), and may transmit the processed signals to the apparatus 806. In some aspects, the transmission component 804 may include one or more antennas, a modem, a modulator, a transmit MIMO processor, a transmit processor, a controller/processor, a memory, or a combination thereof, of the peripheral device described in connection with Fig. 2. In some aspects, the transmission component 804 may be co-located with the reception component 802 in a transceiver.

In some aspects, the microphone component 810 may obtain microphone data. The selection component 812 may select a P2C slot, among P2C slots of an eSCO interval, that occurs after a first P2C slot in the eSCO interval. The transmission component 804 may transmit the microphone data to a primary peripheral device in the P2C slot.

The transmission component 804 may transmit the microphone data in all P2C slots of the eSCO interval except a P2C slot of a reserved window.

The transmission component 804 may perform eSCO relaying, and transmitting microphone data, in alternating P2C slots in the eSCO interval. The transmission component 804 may refrain from transmitting the microphone data in the first P2C slot.

In some aspects, the reception component 802 may receive microphone data in a P2C slot, among P2C slots of an eSCO interval, that is not a first P2C slot of the eSCO interval. The transmission component 804 may transmit the microphone data to a central device.

The number and arrangement of components shown in Fig. 8 are provided as an example. In practice, there may be additional components, fewer components, different components, or differently arranged components than those shown in Fig. 8. Furthermore, two or more components shown in Fig. 8 may be implemented within a single component, or a single component shown in Fig. 8 may be implemented as multiple, distributed components. Additionally, or alternatively, a set of (one or more) components shown in Fig. 8 may perform one or more functions described as being performed by another set of components shown in Fig. 8.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware, firmware, and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware, firmware, and/or a combination of hardware and software.

It will be apparent that systems and/or methods described herein may be implemented in different forms of hardware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, a combination of related and unrelated items), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A secondary peripheral device (306) for wireless communication, comprising:
a memory; and
one or more processors, coupled to the memory, configured to:
obtain (610) microphone data;
select (620) multiple peripheral-to-central, P2C, slots, among P2C slots of an enhanced synchronous connection oriented, eSCO, interval, that occur after a first P2C slot in the eSCO interval, wherein one of the multiple P2C slots is the
second P2C slot of the eSCO interval; and
transmit the microphone data to a primary peripheral device in the multiple P2C slots, wherein the microphone data transmitted in the multiple P2C slots is the same microphone data transmitted multiple times.

2. The secondary peripheral device (306) of claim 1, wherein the one or more processors, to transmit the microphone data, are further configured to:
transmit the microphone data in P2C slots of the eSCO interval except a P2C slot of a reserved window; or
transmit the microphone data in the second P2C slot with an acknowledgement for voice data received in any of two preceding central-to-peripheral, C2P, slots; or
transmit the microphone data in the second P2C slot with a negative acknowledgement for voice data not received in any of two preceding C2P slots; or
transmit the microphone data in any or a combination of second through T/2 P2C slots, where T is a quantity of slots in the eSCO interval; or
transmit the microphone data in P2C slots of the eSCO interval that are estimated to be free.

3. The secondary peripheral device (306) of claim 1, wherein the one or more processors are further configured to:
disable eSCO relaying or perform eSCO relaying, and transmitting microphone data, in alternating P2C slots in the eSCO interval; or
refrain from transmitting the microphone data in the first P2C slot.

4. A primary peripheral device (304) for wireless communication, comprising:
a memory; and
one or more processors, coupled to the memory, configured to:
receive (710) microphone data from a secondary peripheral device (306) in multiple peripheral-to-central, P2C, slots,
among P2C slots of an enhanced synchronous connection oriented, eSCO, interval, that are not a first P2C slot of the eSCO interval, wherein one of the multiple P2C slots is the second P2C slot of an eSCO window of the eSCO interval,
and wherein the microphone data received in the multiple P2C slots is the same data received multiple times; and
transmit (720) the microphone data to a central device (302).

5. The primary peripheral device (304) of claim 4, wherein none of multiple P2C slots is the first P2C slot that immediately follows after an end of an eSCO window of the eSCO interval.

6. The primary peripheral device (304) of claim 4, wherein the one or more processors, to receive the microphone data, are configured to:
receive the microphone data in a second P2C slot after an eSCO window of the eSCO interval; or
receive the microphone data in the P2C slot with an acknowledgement for voice data received in any of two preceding central-to-peripheral, C2P, slots; or
receive the microphone data in the P2C slot with a negative acknowledgement; or
receive the microphone data in all free P2C slots of the eSCO interval.

7. A method of wireless communication performed by a secondary peripheral device (306), comprising:
obtaining (610) microphone data;
selecting (620) multiple peripheral-to-central, P2C, slots, among P2C slots of an enhanced synchronous connection oriented, eSCO, interval, that occur after a first P2C slot in the eSCO interval, wherein one of the P2C slots is the second P2C
slot of the eSCO interval; and
transmitting (630) the microphone data to a primary peripheral device in the multiple P2C slots, wherein the microphone data transmitted in the multiple P2C slots is the same microphone data transmitted multiple times.

8. The method of claim 7, wherein transmitting the microphone data includes:
transmitting in P2C slots of the eSCO interval except a P2C slot of a reserved window; or
transmitting the microphone data in the second P2C slot with an acknowledgement for voice data received in any of two preceding central-to-peripheral, C2P, slots or a negative acknowledgement for voice data not received in any of two preceding C2P slots; or
transmitting the microphone data in any or a combination of second through T/2 P2C slots, where T is a quantity of slots in the eSCO interval; or
transmitting the microphone data in P2C slots of the eSCO interval that are estimated to be free.

9. The method of claim 7, further comprising:
disabling eSCO relaying or performing eSCO relaying, and transmitting microphone data, in alternating P2C slots in the eSCO interval; or refraining from transmitting the microphone data in the first P2C slot.

10. A method of wireless communication performed by a primary peripheral device (304), comprising:
receiving (710) microphone data from a secondary peripheral device (306) in multiple peripheral-to-central, P2C, slots,
among P2C slots of an enhanced synchronous connection oriented, eSCO, interval, that are not a first P2C slot of the eSCO interval, wherein one of the multiple P2C slots is the second P2C slot of an eSCO window of the eSCO interval,
and wherein the received microphone data in the second P2C slots is the same data received multiple times; and
transmitting (720) the microphone data to a central device (302).

11. The method of claim 10, wherein none of the multiple P2C slots is the first P2C slot that immediately follows after an end of an eSCO window of the eSCO interval.

12. The method of claim 10, wherein receiving the microphone data includes receiving the microphone data in a second P2C slot after an eSCO window of the eSCO interval.

13. A computer program product comprising instructions, which when executed by a secondary peripheral device (306) cause the secondary peripheral device (306) to perform a method according to any of claims 7 to 9.

14. A computer program product comprising instructions, which when executed by a primary peripheral device (304) cause the primary peripheral device (304) to perform a method according to any of claims 10 to 12.

## Patentansprüche

1. Ein sekundäres Peripheriegerät (306) zur drahtlosen Kommunikation, aufweisend:
einen Speicher; und
einen oder mehrere Prozessoren, die mit dem Speicher gekoppelt sind,
konfiguriert sind zum:
Erhalten (610) von Mikrofondaten;
Auswählen (620) mehrerer Peripherie-zu-Zentral-, P2C-, Schlitze aus P2C-Schlitzen eines erweiterten synchronen verbindungsorientierten, eSCO-, Intervalls, die nach einem ersten P2C-Schlitz in dem eSCO-Intervall auftreten, wobei einer der mehreren P2C-Schlitze der zweite P2C-Schlitz des eSCO-Intervalls ist; und
Übertragen der Mikrofondaten an ein primäres Peripheriegerät in den mehreren P2C-Slots, wobei die in den mehreren P2C-Slots übertragenen Mikrofondaten dieselben mehrfach übertragenen Mikrofondaten sind.

2. Das sekundäre Peripheriegerät (306) nach Anspruch 1, wobei der eine oder die mehreren Prozessoren zum Übertragen der Mikrofondaten ferner konfiguriert sind zum:
Übertragen der Mikrofondaten in allen P2C-Slots des eSCO-Intervalls mit Ausnahme eines P2C-Slots eines reservierten Fensters; oder
Übertragen der Mikrofondaten in dem zweiten P2C-Slot mit einer Bestätigung für Sprachdaten, die in einem von zwei vorhergehenden C2P-Slots empfangen werden; oder
Übertragen der Mikrofondaten in dem zweiten P2C-Slot mit einer negativen Bestätigung für Sprachdaten, die nicht in einem von zwei vorhergehenden C2P-Slots empfangen werden; oder
Übertragen der Mikrofondaten in einem beliebigen oder einer Kombination von zweiten bis T/2 P2C-Slots, wobei T eine Menge von Slots in dem eSCO-Intervall ist; oder
Übertragen der Mikrofondaten in P2C-Slots des eSCO-Intervalls, die als frei geschätzt werden.

3. Das sekundäre Peripheriegerät (306) nach Anspruch 1, wobei der eine oder die mehreren Prozessoren ferner konfiguriert sind zum:
Deaktivieren von eSCO-Weiterleitung oder Durchführen von eSCO-Weiterleitung und Übertragen von Mikrofondaten in alternierenden P2C-Slots in dem eSCO-Intervall; oder
Unterlassen von Übertragen der Mikrofondaten in dem ersten P2C-Slot.

4. Ein primäres Peripheriegerät (304) zur drahtlosen Kommunikation, aufweisend:
einen Speicher; und
einen oder mehrere Prozessoren, die mit dem Speicher gekoppelt sind,
konfiguriert sind zum:
Empfangen (710) von Mikrofondaten von einem sekundären Peripheriegerät (306) in mehreren Peripherie-zu-Zentral-, P2C-, Schlitzen aus P2C-Schlitzen eines erweiterten synchronen verbindungsorientierten, eSCO-, Intervalls, die kein erster P2C-Schlitz des eSCO-Intervalls sind, wobei einer der mehreren P2C-Schlitze der zweite P2C-Schlitz eines eSCO-Fensters des eSCO-Intervalls ist, und wobei die in den mehreren P2C-Schlitzen empfangenen Mikrofondaten dieselben mehrfach empfangenen Mikrofondaten sind; und
Übertragen (720) der Mikrofondaten an ein zentrales Gerät (302).

5. Das primäre Peripheriegerät (304) nach Anspruch 4, wobei keiner der mehreren P2C-Slots der erste P2C-Slot ist, der unmittelbar nach einem Ende eines eSCO-Fensters des eSCO-Intervalls folgt.

6. Das primäre Peripheriegerät (304) nach Anspruch 4, wobei der eine oder die mehreren Prozessoren zum Empfangen der Mikrofondaten konfiguriert sind zum:
Empfangen der Mikrofondaten in einem zweiten P2C-Slot nach einem eSCO-Fenster des eSCO-Intervalls; oder
Empfangen der Mikrofondaten in dem P2C-Slot mit einer Bestätigung für Sprachdaten, die in einem von zwei vorhergehenden C2P-Slots empfangen werden; oder
Empfangen der Mikrofondaten in dem P2C-Slot mit einer negativen Bestätigung; oder
Empfangen der Mikrofondaten in allen freien P2C-Slots des eSCO-Intervalls.

7. Ein Verfahren zur drahtlosen Kommunikation, das von einem sekundären Peripheriegerät (306) durchgeführt wird, aufweisend:
Erhalten (610) von Mikrofondaten;
Auswählen (620) mehrerer Peripherie-zu-Zentral-, P2C-, Schlitze aus P2C-Schlitzen eines erweiterten synchronen verbindungsorientierten, eSCO-, Intervalls, die nach einem ersten P2C-Schlitz in dem eSCO-Intervall auftreten, wobei einer der P2C-Schlitze der zweite P2C-Schlitz des eSCO-Intervalls ist; und
Übertragen (630) der Mikrofondaten an ein primäres Peripheriegerät in den mehreren P2C-Slots, wobei die in den mehreren P2C-Slots übertragenen Mikrofondaten dieselben mehrfach übertragenen Mikrofondaten sind.

8. Das Verfahren nach Anspruch 7, wobei Übertragen der Mikrofondaten beinhaltet:
Übertragen in P2C-Slots des eSCO-Intervalls mit Ausnahme eines P2C-Slots eines reservierten Fensters; oder
Übertragen der Mikrofondaten in dem zweiten P2C-Slot mit einer Bestätigung für Sprachdaten, die in einem von zwei vorhergehenden C2P-Slots empfangen werden, oder einer negativen Bestätigung für Sprachdaten, die nicht in einem von zwei vorhergehenden C2P-Slots empfangen werden; oder
Übertragen der Mikrofondaten in einem beliebigen oder einer Kombination von zweiten bis T/2 P2C-Slots, wobei T eine Menge von Slots in dem eSCO-Intervall ist; oder
Übertragen der Mikrofondaten in P2C-Slots des eSCO-Intervalls, die als frei geschätzt werden.

9. Das Verfahren nach Anspruch 7, weiter aufweisend:
Deaktivieren von eSCO-Weiterleitung oder Durchführen von eSCO-Weiterleitung und Übertragen von Mikrofondaten in alternierenden P2C-Slots in dem eSCO-Intervall; oder Unterlassen von Übertragen der Mikrofondaten in dem ersten P2C-Slot.

10. Ein Verfahren zur drahtlosen Kommunikation, das von einem primären Peripheriegerät (304) durchgeführt wird, aufweisend:
Empfangen (710) von Mikrofondaten von einem sekundären Peripheriegerät (306) in mehreren Peripherie-zu-Zentral-, P2C-, Schlitzen aus P2C-Schlitzen eines erweiterten synchronen verbindungsorientierten, eSCO-, Intervalls, die kein erster P2C-Schlitz des eSCO-Intervalls sind, wobei einer der mehreren P2C-Schlitze der zweite P2C-Schlitz eines eSCO-Fensters des eSCO-Intervalls ist, und wobei die empfangenen Mikrofondaten in den zweiten P2C-Schlitzen dieselben mehrfach empfangenen Mikrofondaten sind; und
Übertragen (720) der Mikrofondaten an ein zentrales Gerät (302).

11. Das Verfahren nach Anspruch 10, wobei keiner der mehreren P2C-Slots der erste P2C-Slot ist, der unmittelbar nach einem Ende eines eSCO-Fensters des eSCO-Intervalls folgt.

12. Das Verfahren nach Anspruch 10, wobei Empfangen der Mikrofondaten Empfangen der Mikrofondaten in einem zweiten P2C-Slot nach einem eSCO-Fenster des eSCO-Intervalls beinhaltet.

13. Ein Computerprogrammprodukt, das Anweisungen aufweist, die, wenn sie von einem sekundären Peripheriegerät (306) ausgeführt werden, das sekundäre Peripheriegerät (306) veranlassen, ein Verfahren nach einem der Ansprüche 7 bis 9 durchzuführen.

14. Ein Computerprogrammprodukt, das Anweisungen aufweist, die, wenn sie von einem primären Peripheriegerät (304) ausgeführt werden, das primäre Peripheriegerät (304) veranlassen, ein Verfahren nach einem der Ansprüche 10 bis 12 durchzuführen.

## Revendications

1. Un dispositif périphérique secondaire (306) pour la communication sans fil, comprenant :
une mémoire ; et
un ou plusieurs processeurs, couplés à la mémoire, configurés pour :
obtenir (610) des données de microphone ;
sélectionner (620) de multiples slots périphérique-à-central, P2C, parmi les slots P2C d'un intervalle orienté connexion synchrone améliorée, eSCO, qui surviennent après un premier slot P2C dans l'intervalle eSCO, dans lequel l'un des multiples slots P2C est le second slot P2C de l'intervalle eSCO ; et
transmettre les données de microphone à un dispositif périphérique primaire dans les multiples slots P2C, dans lequel les données de microphone transmises dans les multiples slots P2C sont les mêmes données de microphone transmises plusieurs fois.

2. Le dispositif périphérique secondaire (306) selon la revendication 1, dans lequel les un ou plusieurs processeurs, pour transmettre les données de microphone, sont en outre configurés pour :
transmettre les données de microphone dans des slots P2C de l'intervalle eSCO à l'exception d'un slot P2C d'une fenêtre réservée ; ou
transmettre les données de microphone dans le second slot P2C avec un accusé de réception pour des données vocales reçues dans l'un de deux slots central-à-périphérique, C2P, précédents ; ou
transmettre les données de microphone dans le second slot P2C avec un accusé de réception négatif pour des données vocales non reçues dans l'un de deux slots C2P précédents ; ou
transmettre les données de microphone dans n'importe lequel, ou une combinaison, de seconds à T/2 slots P2C, où T est une quantité de slots dans l'intervalle eSCO ; ou transmettre les données de microphone dans les slots P2C de l'intervalle eSCO qui sont estimés comme étant libres.

3. Le dispositif périphérique secondaire (306) selon la revendication 1, dans lequel les un ou plusieurs processeurs sont en outre configurés pour :
désactiver le relais eSCO ou réaliser le relais eSCO, et transmettre des données de microphone, dans des slots P2C alternatifs dans l'intervalle eSCO ; ou
s'abstenir de transmettre les données de microphone dans le premier slot P2C.

4. Un dispositif périphérique primaire (304) pour la communication sans fil, comprenant :
une mémoire ; et
un ou plusieurs processeurs, couplés à la mémoire, configurés pour :
recevoir (710) des données de microphone à partir d'un dispositif périphérique secondaire (306) dans de multiples slots périphérique-à-central, P2C, parmi des slots P2C d'un intervalle de connexion synchrone améliorée orientée, eSCO, qui ne sont pas un premier slot P2C de l'intervalle eSCO, dans lequel l'un des multiples slots P2C est le second slot P2C d'une fenêtre eSCO de l'intervalle eSCO,
et dans lequel les données de microphone reçues dans les multiples slots P2C sont les mêmes données reçues plusieurs fois ; et
transmettre (720) les données de microphone à un dispositif central (302).

5. Le dispositif périphérique primaire (304) selon la revendication 4, dans lequel aucun des multiples slots P2C n'est le premier slot P2C immédiatement consécutif après la fin d'une fenêtre eSCO de l'intervalle eSCO.

6. Le dispositif périphérique primaire (304) selon la revendication 4, dans lequel les un ou plusieurs processeurs, pour recevoir les données de microphone, sont configurés pour :
recevoir les données de microphone dans un second slot P2C après une fenêtre eSCO de l'intervalle eSCO ; ou
recevoir les données de microphone dans le slot P2C avec un accusé de réception pour les données vocales reçues dans l'un de deux slots central-à-périphérique, C2P, précédents ; ou
recevoir les données de microphone dans le slot P2C avec un acquittement négatif ; ou
recevoir les données du microphone dans tous les slots P2C libres de l'intervalle eSCO.

7. Un procédé de communication sans fil réalisé par un dispositif périphérique secondaire (306), comprenant :
l'obtention (610) de données de microphone ;
la sélection (620) de multiples slots périphérique-à-central, P2C, parmi des slots P2C d'un intervalle orienté connexion synchrone améliorée, eSCO, qui surviennent après un premier slot P2C dans l'intervalle eSCO, dans lequel l'un des slots P2C est le second slot P2C de l'intervalle eSCO ; et
la transmission (630) des données de microphone à un dispositif périphérique primaire dans les multiples slots P2C, dans lequel les données de microphone transmises dans les multiples slots P2C sont les mêmes données de microphone transmises plusieurs fois.

8. Le procédé selon la revendication 7, dans lequel la transmission des données de microphone inclut :
la transmission dans des slots P2C de l'intervalle eSCO à l'exception d'un slot P2C d'une fenêtre réservée ; ou
la transmission des données de microphone dans le second slot P2C avec un accusé de réception pour des données vocales reçues dans l'un de deux slots central-à-périphérique, C2P, précédents ou un accusé de réception négatif pour des données vocales non reçues dans l'un des deux slots C2P précédents ; ou
la transmission des données de microphone dans n'importe lequel, ou une combinaison, de seconds à T/2 slots P2C, où T est une quantité de slots dans l'intervalle eSCO ; ou
la transmission des données de microphone dans des slots P2C de l'intervalle eSCO qui sont estimés libres.

9. Le procédé selon la revendication 7, comprenant en outre :
la désactivation du relais eSCO ou la réalisation du relais eSCO, et la transmission de données de microphone, dans des slots P2C alternatifs dans l'intervalle eSCO ; ou
l'abstention de transmettre les données de microphone dans le premier slot P2C.

10. Un procédé de communication sans fil réalisé par un dispositif périphérique primaire (304), comprenant :
la réception (710) de données de microphone à partir d'un dispositif périphérique secondaire (306) dans plusieurs slots périphérique-à-central, P2C,
parmi des slots P2C d'un intervalle orienté connexion synchrone améliorée, eSCO, qui ne sont pas un premier slot P2C de l'intervalle eSCO, dans lequel l'un des multiples slots P2C est le second slot P2C d'une fenêtre eSCO de l'intervalle eSCO,
et dans lequel les données de microphone reçues dans les seconds slots P2C sont les mêmes données reçues plusieurs fois ; et
la transmission (720) des données de microphone à un dispositif central (302).

11. Le procédé selon la revendication 10, dans lequel aucun des multiples slots P2C n'est le premier slot P2C immédiatement consécutif après la fin d'une fenêtre eSCO de l'intervalle eSCO.

12. Le procédé selon la revendication 10, dans lequel la réception des données de microphone inclut la réception des données de microphone dans un second slot P2C après une fenêtre eSCO de l'intervalle eSCO.

13. Un produit programme de calculateur comprenant des instructions qui, lorsqu'elles sont exécutées par un dispositif périphérique secondaire (306), amènent le dispositif périphérique secondaire (306) à réaliser un procédé selon l'une des revendications 7 à 9.

14. Un produit programme de calculateur comprenant des instructions qui, lorsqu'elles sont exécutées par un dispositif périphérique primaire (304), amènent le dispositif périphérique primaire (304) à réaliser un procédé selon l'une des revendications 10 à 12.
